# EUROPÄISCHE PATENTSCHRIFT

(11) **EP 4 289 661 B1**
(45) Veröffentlichungstag und Bekanntmachung des Hinweises auf die Patenterteilung: **28.08.2024**
(21) Anmeldenummer: 22177808.7
(22) Anmeldetag: 08.06.2022
(51) Int. Cl.: B60N 2/00, B60N 2/005

(54) **VERFAHREN UND SYSTEM ZUM ERKENNEN EINES SITZBELEGUNGSZUSTANDS EINER SITZANORDNUNG AUF BASIS VON RADARPUNKTWOLKEN**
METHOD AND SYSTEM FOR DETECTING A SEAT OCCUPANCY STATE OF A SEAT ASSEMBLY BASED ON RADAR POINT CLOUDS
PROCÉDÉ ET SYSTÈME DE DÉTECTION D'UN ÉTAT D'OCCUPATION DE SIÈGES D'UN ENSEMBLE DE SIÈGES EN FONCTION DE NUAGES DE POINTS RADAR

(43) Veröffentlichungstag der Anmeldung: 13.12.2023
(73) Patentinhaber: gestigon GmbH, 23562 Lübeck (DE)
(72) Erfinder: STRAUSS, Christian, 23562 Luebeck (DE); KRÜCKEMEIER, Verena, 23562 Luebeck (DE)
(74) Vertreter: Ralf, Thorge

(56) Entgegenhaltungen:
- DE-A1- 102018 211 699
- US-A1- 2007 251 749
- US-B2- 10 730 524

## Beschreibung

Die vorliegende Erfindung betrifft ein Verfahren, ein Computerprogramm und ein zur Ausführung des Verfahrens konfiguriertes System, jeweils zum automatisierten Erkennen eines Sitzbelegungszustands einer Sitzanordnung mit einer Mehrzahl von Sitzplätzen.

In verschiedenen Situationen kann es erforderlich sein, automatisiert einen aktuellen Sitzbelegungszustand einer Sitzanordnung mit einer Mehrzahl von Sitzplätzen festzustellen. Eine solche Situation kann insbesondere in Fahrzeugen auftreten,z beispielsweise in Kraftfahrzeugen, wo eine Konfiguration des Fahrzeugs oder ein Aktivieren, Deaktivieren und/oder Steuern einer oder mehrere Fahrzeugfunktionalitäten in Abhängigkeit von einem aktuellen Sitzbelegungszustand erfolgen sollen. Beispielsweise ist es bei Kraftfahrzeugen bekannt, in Abhängigkeit von einem erkannten Sitzbelegungszustand einen akustischen oder optischen Hinweis an Fahrzeuginsassen zum Anlegen von Sitzgurten auszugeben oder ein Aktivieren bzw. Deaktivieren von Airbags zu steuern.

Zum automatisierten Detektieren eines aktuellen Sitzbelegungszustands einer Sitzanordnung mit einem oder mehreren Sitzen, insbesondere einer Anordnung von Fahrzeugsitzen in einem Fahrzeug, sind dazu insbesondere sogenannte Sitzbelegungsmatten bekannt, die in die Sitze integriert sind (meist jeweils eine je Sitz) und druckempfindliche Sensoren zum Detektieren einer Belegung des jeweiligen Sitzes verwenden. Ein Sitzbelegungszustand des Sitzes wird dabei in Abhängigkeit von den Sensorsignalen bzw. Sensordaten dieser Sensoren bestimmt, in der Regel mittels einer Schwellwertprüfung.

Diese bekannten Lösungen setzen somit eine Ausstattung der Sitze mittels einer darin eingebauten Sensorik voraus und sind zudem meist nicht in der Lage, verschiedene Sitzbelegungszustände jenseits von "besetzt" und "nicht besetzt" zu unterscheiden. Des Weiteren müssen die Sensoren typischerweise ab Werk bereits in die Sitze integriert werden, sodass ein Nachrüsten schwierig oder unmöglich ist und das Erfassen eines Sitzbelegungszustands von nicht derart ausgerüsteten Sitzen entfällt.

Des Weiteren sind zum automatisierten Detektieren eines aktuellen Sitzbelegungszustands Systeme mit einem Radarsensor zur Radarabtastung der Sitzanordnung bekannt, bei denen basierend auf mehreren Radarpunktwolken, welche jeweils in unterschiedlichen Messrahmen mit unterschiedlicher zeitlicher Dauer erfasste Messdaten repräsentieren, bestimmt wird, ob ein Sitz besetzt ist oder nicht. Bei einer starken Bewegung einer auf einem Sitz befindlichen Person bewegt sich jedoch die Radarpunktwolke in Richtung dieser Person, wodurch gegebenenfalls auf anderen Sitzen befindliche Personen, die sich weniger stark bewegen, nicht erfasst werden können bzw. ausgeblendet werden. Das Dokument US10730524B2 offenbart ein Verfahren zum automatisierten Erkennen eines Sitzbelegungszustands bzw. Zustands des Fahrers einer Sitzanordnung.

Es ist eine Aufgabe der vorliegenden Erfindung, eine verbesserte Lösung zum automatisierten Erkennen eines Sitzbelegungszustands einer Sitzanordnung mit zumindest einem Sitzplatz anzugeben.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der hier vorgestellten Lösung betrifft ein, insbesondere computerimplementiertes, Verfahren zum automatisierten Erkennen eines, insbesondere sitzplatzbezogenen, Sitzbelegungszustands einer Sitzanordnung mit einer Mehrzahl von Sitzplätzen (bzw. gleichbedeutend: Sitzen), insbesondere Sitzplätzen in oder für ein Fahrzeug, wie etwa ein Automobil (z.B. LKW, PKW oder Bus), für die individuell oder kumulativ ein Sitzbelegungszustand im Rahmen des Verfahrens zu bestimmen ist. Das Verfahren weist auf: Empfangen oder Erzeugen von Messdaten, die für jeden Messrahmen aus mehreren Messrahmen jeweils eine zugeordnete Radarpunktwolke repräsentieren, so dass die Messdaten eine zu den mehreren Messrahmen korrespondierende Mehrzahl von Radarpunktwolken repräsentieren, wobei jede Radarpunktwolke der Mehrzahl von Radarpunktwolken auf Basis einer zu bzw. während einem dem jeweiligen Messrahmen zugeordneten Messzeitpunkt oder Messzeitraum erfolgenden Radarabtastung eines die Sitzanordnung zumindest abschnittsweise umgebenden Raumbereichs gewonnen wurde bzw. wird und Radarpunkte enthält, die mehreren Messrahmen mehrere Gruppen von Messrahmen aufweisen, welche jeweils einen oder mehrere Messrahmen gleicher zeitlicher Länge aufweisen, die zeitliche Länge von Messrahmen unterschiedlicher Gruppen von Messrahmen unterschiedlich ist, und den mehreren Gruppen von Messrahmen jeweils eine entsprechende Gruppe von Radarpunktwolken zugeordnet ist; und Bestimmen eines Sitzbelegungszustands der Sitzanordnung anhand eines Auswertungsmodells, das in Abhängigkeit von zumindest zwei Gruppen von Radarpunktwolken einen von mehreren vordefinierten möglichen Sitzbelegungszuständen der Sitzanordnung als Auswertungsergebnis liefert; wobei die einzelnen Radarpunkte jeder Radarpunktwolke jeweils zumindest durch eine Position des jeweiligen Radarpunkts im dreidimensionalen Raum repräsentiert werden; für jede Radarpunktwolke die Menge ihrer Radarpunkte mittels Cluster-Bildung in Abhängigkeit von der jeweiligen räumlichen Lage der Radarpunkte in Bezug auf die Sitzplätze in mehrere jeweils eine Untermenge der Radarpunkte enthaltende Cluster unterteilt wird, um jedem der Sitzplätze einen ihm räumlich nächstliegenden der Cluster individuell zuzuordnen; das Bestimmen des Sitzbelegungszustands der Sitzanordnung ein individuelles Bestimmen eines jeweiligen individuellen Sitzbelegungszustands für jeden der Sitzplätze in Abhängigkeit von den jeweils zugehörigen Clustern der zumindest zwei Gruppen von Radarpunktwolken umfasst, um ein einen Sitzbelegungszustand des jeweiligen Sitzplatzes kennzeichnendes Auswertungsergebnis zu erhalten; für jeden Cluster zumindest einer Radarpunktwolke derjenigen der zumindest zwei Gruppen von Radarpunktwolken, die dem Messrahmen mit der kleinsten zeitlichen Länge zugeordnet ist, eine Anzahl der in dem jeweiligen Cluster enthaltenen Radarpunkte oder eine davon abhängige Größe bestimmt wird, bestimmt wird, ob die Anzahl der in dem jeweiligen Cluster einer einzelnen Radarpunktwolke derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe, oder ein Mittelwert der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe kleiner als ein erster vorgegebener Schwellenwert ist oder nicht, und ein gespeicherter Sitzbelegungszustand basierend auf dem Auswertungsergebnis nur dann aktualisiert wird, wenn für jeden Cluster der einzelnen Radarpunktwolke derjenigen der zumindest zwei Gruppen von Radarpunktwolken, die dem Messrahmen mit der kleinsten zeitlichen Länge zugeordnet ist, die Anzahl der Radarpunkte oder die davon abhängige Größe kleiner als der erste vorgegebene Schwellenwert ist oder alle Mittelwerte der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder die davon abhängige Größe kleiner als der erste vorgegebene Schwellenwert ist, und Ausgeben einer in Abhängigkeit von dem Auswertungsergebnis definierten Information, wenn der gespeicherte Sitzbelegungszustand aktualisiert wurde.

Unter dem Begriff "Sitzbelegungszustand" einer Sitzanordnung mit einer Mehrzahl von Sitzplätzen, wie hierin verwendet, ist insbesondere eine Information zu verstehen, die angibt, ob oder inwieweit die Sitzanordnung bzw. zumindest einer ihrer Sitze mit einem Objekt, insbesondere einer Sache oder einer Person belegt bzw. besetzt ist. Der Sitzbelegungszustand kann in einem einfachen Beispiel nur das Vorhandensein bzw. die Abwesenheit eines Objekts angeben, oder aber in einem weiterentwickelten Beispiel für den Fall des Vorhandenseins zumindest eines Objekts auf der Sitzanordnung bzw. einem oder mehreren ihrer Sitze, eine Aussage zur Art oder einer anderen Eigenschaft, wie etwa einer räumlichen Ausdehnung, des Objekts angeben.

Unter dem Begriff "Radarpunktwolke", wie hierin verwendet, ist insbesondere eine mittels Radar-Abtastung zumindest einer Objektoberfläche gewonnenen Menge von Punkten eines Vektorraums zu verstehen, die eine, typischerweise unorganisierte, räumliche Struktur ("Wolke") aufweist. Im Falle einer Radarpunktwolke können die Punkte der Radarpunktwolke als "Radarpunkte" bezeichnet werden. Eine (Radar-)Punktwolke kann insbesondere durch die in ihr enthaltenen (Radar-)Punkte beschrieben werden. Die Radarpunkte wiederum können jeweils insbesondere durch ihre Raumkoordinaten beschrieben werden, wobei diese je Radarpunkt einen bei der Radarabtastung gemessenen Ort der Reflexion eines ausgestrahlten Radarsignals an einer Objektoberfläche angeben. Zu den Radarpunkten können zusätzlich Attribute, wie z. B. gemessene Dopplergeschwindigkeit oder ein Signal-zu-Rausch-Verhältnis (SNR) erfasst sein.

Unter dem Begriff "Messrahmen", wie hierin verwendet, ist insbesondere ein Messzeitpunkt oder eine Messzeitraum in einer zeitlichen Abfolge von definierten, insbesondere periodisch, aufeinanderfolgenden Messzeitpunkten oder Messzeiträumen zu verstehen, zu bzw. während denen jeweils eine Messung, vorliegend eine Radarabtastung zumindest einer Objektoberfläche, stattfindet bzw. stattgefunden hat. Jedem Messrahmen ist das Ergebnis der ihm zugehörigen Messung, vorliegend die für den Messrahmen durch Radarabtastung generierte Radarpunktwolke, zugeordnet.

Unter dem Begriff "Auswertungsmodell", wie hierin verwendet, ist ein, insbesondere mathematisches, Modell zu verstehen, das eine Radarpunktwolke oder eine oder mehrere sie charakterisierende Kenngrößen als Eingangsgröße(n) nutzt, um in Abhängigkeit davon ein Auswertungsergebnis zu liefern, vorliegend einen von mehreren vordefinierten möglichen Sitzbelegungszuständen der Sitzanordnung. Das Auswertungsmodell kann insbesondere eine mathematische Schätzfunktion sein, wobei die Radarpunktwolke empirische Daten als Stichprobe darstellt und das Auswertungsergebnis einen in Abhängigkeit davon bestimmten Schätzwert darstellt. Das Auswertungsmodell kann insbesondere ein "Maschinenlern-Modell" (bzw. gleichbedeutend "Machine-Learning-Modell") sein, worunter hier insbesondere ein mittels zumindest eines Algorithmus des maschinellen Lernens auf der Grundlage von Beispieldaten, die als Trainingsdaten bezeichnet werden, erstelltes mathematisches, insbesondere statistisches, Modell zum Treffen von Vorhersagen oder Entscheidungen zu verstehen ist, ohne dass der bzw. die Algorithmen explizit für das Treffen solcher Vorhersagen oder Entscheidungen programmiert werden. Insbesondere sind Entscheidungsbaum-basierte Modelle zum maschinellen Lernen ("engl. decision trees") Machine-Learning-Modelle.

Die auszugebende Information kann insbesondere das Auswertungsergebnis selbst repräsentieren. Sie kann auch ein, insbesondere mit einem menschlichen Sinn erfassbares, detektierbares Signal sein, wie etwa ein Warnhinweis, oder ein Steuersignal zur Ansteuerung einer Signalquelle oder ein die Information tragendes Datensignal.

Die hierin gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem hierein gegebenenfalls verwendeten Begriffen "konfiguriert" oder "eingerichtet" eine bestimmte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Erfindungsgemäß werden die Radarpunktwolken in mehrere Cluster segmentiert, indem jedem der Sitzplätze als Cluster eine Teilmenge der Radarpunkte in Abhängigkeit von deren jeweiliger Position so zugeordnet wird, insbesondere je Radarpunkt eindeutig, dass die Radarpunkte des Clusters in einem definierten geschlossenen, insbesondere quaderförmigen, Raumbereich im Umfeld des Sitzplatzes liegen. Die Zuordnung kann insbesondere so erfolgen, dass jeder Radarpunkt dem Cluster des ihm nächstliegenden Sitzplatzes zugeordnet wird. So lässt sich die Radarpunktwolke in Cluster, d.h. im Umfeld der jeweiligen Sitze lokalisierten, Teilmengen der Radarpunktwolke aufteilen, so dass das Bestimmen von sitzspezifischen Sitzbelegungszuständen gezielt und daher mit hoher Zuverlässigkeit auf Basis des dem jeweiligen Sitz zugeordneten Clusters erfolgen kann.

Die Cluster enthalten somit jeweils eine, insbesondere echte, Teilmenge der Menge der Radarpunkte der betreffenden Radarpunktwolke. Die Clusterbildung kann bei einigen Ausführungsformen insbesondere so erfolgen, dass die Cluster disjunkt sind, so dass kein Radarpunkt zwei verschiedenen Clustern zugeordnet ist.

Mithilfe des Verfahrens nach dem ersten Aspekt lässt sich ein auf Basis von jeweils anhand einer tatsächlichen oder simulierten Radarabtastung eines die Sitzanordnung umgebenden Raumbereichs gewonnenen Radarpunktwolken einen Sitzbelegungszustand der Sitzanordnung kennzeichnendes Auswertungsergebnis (insbesondere im Sinne einer Voraussage oder Klassifikation) erhalten. So lassen sich, insbesondere im Fahrzeugkontext (insbesondere für Automobile), radarbasierte Lösungen implementieren, die einen Sitzbelegungszustand (insbesondere ausschließlich) radarbasiert zuverlässig erkennen können und auf Basis davon bestimmte Funktionalitäten oder Systeme, wie etwa einen Gurtwarner oder ein Airbag-System, insgesamt oder selektiv aktivieren, deaktivieren oder steuern/regeln können.

Die Anzahl der erzeugten Radarpunkte je Radarpunktwolke hängt bei vielen Radarmessverfahren davon ab, ob bzw. auf welche Weise sich ein Objekt bewegt. Bei Untersuchungen hat sich herausgestellt, dass im Falle, dass sich das auf einem Sitz befindliche Objekt schnell bewegt, insbesondere die Anzahl der in einem Messrahmen mit einer kurzen, insbesondere kleinsten zeitlichen Länge, erfassten Radarpunkte, welche dem entsprechenden Cluster zugeordnet sind, stark zunimmt. Daher kann durch die Auswahl eines geeigneten ersten vorgegebenen Schwellenwerts, der basierend auf empirischen Daten bestimmt werden kann, und den Vergleich der Anzahl der erfassten Radarpunkte oder einer davon abgeleiteten Größe mit dem ersten vorgegebenen Schwellenwert ermittelt bzw. bestimmt werden, ob das von dem Auswertungsmodell gelieferte Auswertungsergebnis fehlerhaft ist oder nicht.

Insbesondere kann dadurch, dass für jeden Cluster zumindest einer Radarpunktwolke derjenigen der zumindest zwei Gruppen von Radarpunktwolken, die dem Messrahmen mit der kleinsten zeitlichen Länge zugeordnet ist, eine Anzahl der in dem jeweiligen Cluster enthaltenen Radarpunkte oder eine davon abhängige Größe bestimmt wird, bestimmt wird, ob die Anzahl der in dem jeweiligen Cluster einer einzelnen Radarpunktwolke derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe, oder ein Mittelwert der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe kleiner als ein erster vorgegebener Schwellenwert ist oder nicht, auf Basis der Bestimmung(en), nämlich insbesondere wenn für jeden Cluster der einzelnen Radarpunktwolke derjenigen der zumindest zwei Gruppen von Radarpunktwolken, die dem Messrahmen mit der kleinsten zeitlichen Länge zugeordnet ist, die Anzahl der Radarpunkte oder die davon abhängige Größe größer als der erste vorgegebene Schwellenwert ist oder alle Mittelwerte der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder die davon abhängige Größe größer als der erste vorgegebene Schwellenwert ist, mit hoher Sicherheit erkannt werden, dass die anhand der Auswertung vorgenommene Bestimmung des Sitzbelegungszustands der Sitzanordnung fehlerhaft ist. In diesem Fall wird die vorgenommene Radarabtastung verworfen, und der anhand einer vorherigen Radarabtastung ermittelte und gespeicherte Sitzbelegungszustand nicht anhand der zuletzt durchgeführten Radarabtastung aktualisiert. Auf diese Weise kann die Fehlerrate bei der Ausgabe des Sitzbelegungszustands reduziert werden.

Nachfolgend werden verschiedene beispielhafte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der vorliegenden Lösung kombiniert werden können.

Bei Untersuchungen hat sich ferner herausgestellt, dass sich im Falle, dass sich das auf einem Sitz befindliche Objekt schnell bewegt, insbesondere auch ein Doppler-Verschiebungswert des Radarsignals zum jeweiligen Radarpunkt für Radarpunkte, die in dem Cluster enthalten sind, welches dem entsprechenden Sitz zugeordnet ist, stark erhöht. Daher kann durch die Auswahl eines geeigneten zweiten vorgegebenen Schwellenwerts, der basierend auf empirischen Daten bestimmt werden kann, und den (zusätzlichen) Vergleich der Doppler-Verschiebungswerte der in dem entsprechenden Cluster enthaltenen Radarpunkte mit dem zweiten vorgegebenen Schwellenwert auf zuverlässigere Weise ermittelt bzw. bestimmt werden, ob das von dem Auswertungsmodell gelieferte Auswertungsergebnis fehlerhaft ist oder nicht.

Demzufolge werden bei einigen Ausführungsformen die einzelnen Radarpunkte jeder Radarpunktwolke jeweils ferner durch einen Doppler-Verschiebungswert des Radarsignals zum jeweiligen Radarpunkt repräsentiert, wobei für jeden Cluster zumindest einer Radarpunktwolke der zumindest zwei Gruppen von Radarpunktwolken bestimmt wird, ob der Doppler-Verschiebungswert jedes Radarpunkts des jeweiligen Clusters oder ein Mittelwert der Doppler-Verschiebungswerte aller Radarpunkte des jeweiligen Clusters kleiner als ein zweiter vorgegebener Schwellenwert ist oder nicht, und der gespeicherte Sitzbelegungszustand basierend auf dem Auswertungsergebnis nur dann aktualisiert wird, wenn für jeden Cluster einer einzelnen Radarpunktwolke der zumindest zwei Gruppen von Radarpunktwolken der Doppler-Verschiebungswert jedes Radarpunkts des jeweiligen Clusters oder ein Mittelwert der Doppler-Verschiebungswerte aller Radarpunkte des jeweiligen Clusters kleiner als der zweite vorgegebene Schwellenwert ist oder ein Mittelwert der jeweiligen Mittelwerte der Doppler-Verschiebungswerte aller in jeweiligen, einander räumlich entsprechenden Clustern mehrerer Radarpunktwolken der zumindest zwei Gruppen von Radarpunktwolken enthaltenen Radarpunkte kleiner als der vorgegebene zweite Schwellenwert ist. Auf diese Weise kann die Fehlerrate bei der Ausgabe des Sitzbelegungszustands weiter reduziert werden.

Bei einigen Ausführungsformen weisen die zumindest zwei Gruppen von Messrahmen mehrere zeitlich aufeinanderfolgende Messrahmen auf. Auf diese Weise kann die Genauigkeit bei der Erkennung des Sitzbelegungszustands verbessert werden und/oder eine Bewegung des Objekts erkannt bzw. klassifiziert werden.

Bei einigen Ausführungsformen weist das Verfahren des Weiteren auf: für jede der jeweiligen (mehreren) Radarpunktwolken der zumindest zwei Gruppen von Radarpunktwolken, die im Rahmen des Bestimmens des Sitzbelegungszustands berücksichtigt werden, Bestimmen des jeweiligen Werts zumindest einer definierten Kenngröße zur Charakterisierung von Radarpunktwolken, wobei das Auswertungsmodell so festgelegt ist oder wird, dass bei dem Bestimmen des Sitzbelegungszustands der Sitzanordnung das Auswertungsergebnis in Abhängigkeit von den jeweiligen Werten der zumindest einen Kenngröße für die Radarpunktwolken der zumindest zwei Gruppen von Radarpunktwolken, die im Rahmen des Bestimmens des Sitzbelegungszustands berücksichtigt werden, bestimmt wird. Auf diese Weise kann das Auswertungsmodell in einer vereinfachten Weise bestimmt und angewandt werden, da anstelle ganzer Radarpunktwolken nur noch die Werte der zumindest einen Kenngröße als Eingangsgrößen berücksichtigt werden müssen. Hierbei kann ein zeitlicher Verlauf der Werte eine Bewegung oder ein bestimmtes Bewegungsmuster eines oder mehrerer Objekte auf der Sitzanordnung widerspiegeln, sodass das Auswertungsmodell auf dieser Basis den Sitzbelegungszustand der Sitzanordnung in besonders zuverlässiger Weise bestimmen kann.

Bei einigen Ausführungsformen werden für zumindest eine der Kenngrößen von mehreren Radarpunktwolken einer jeweiligen der zumindest zwei Gruppen von Radarpunktwolken die jeweiligen Werte der Kenngröße dahingehend analysiert, ob darin ein periodischer Verlauf der Kenngröße detektiert wird, wobei das Auswertungsergebnis in Abhängigkeit vom Ergebnis der Analyse bestimmt wird. Hierdurch kann insbesondere nicht nur die Anwesenheit irgendeines Objekts auf einem Sitz der Sitzanordnung erkannt werden, sondern sogar mit hoher Zuverlässigkeit eine Unterscheidung von auf der Sitzanordnung vorhandenen lebenden Objekten, vor allem von Personen und Säugetieren wie etwa Haustieren (z.B. Hunden), getroffen werden. Insbesondere ist es möglich, die verfahrensgemäß auszugebende Information in Abhängigkeit vom Erkennen bzw. Nicht-Erkennen eines solchen periodischen Verlaufs zu definieren. Dabei können auch insbesondere eine oder mehrere detektierte Frequenzen des periodischen Verlaufs berücksichtigt werden, insbesondere so, dass die Information in Abhängigkeit davon definiert wird, ob die bzw. eine Frequenz innerhalb eines bestimmten Frequenzbereichs wie etwa eines typischen Atemfrequenzbereichs liegt. So lässt sich insbesondere eine Gurtanlegewarnfunktionalität oder ein Airbag-System in Abhängigkeit davon steuern, ob eine Atemfrequenz und somit mit hoher Wahrscheinlichkeit eine Person auf der Sitzanordnung bzw. einem bestimmten Sitz davon erkannt wurde.

Bei einigen Ausführungsformen ist oder wird die bzw. eine der Kenngrößen durch die Anzahl der Radarpunkte in der jeweiligen Radarpunktpunktwolke oder eine davon abhängige Größe festgelegt. Wenn bei der Radarabtastung in einem Messrahmen die Anzahl der Radarpunkte der dabei erzeugten Radarpunktwolke davon abhängt, in welchem Ausmaß sich das abgetastete Objekt bewegt, lässt sich so in der bzw. den Kenngrößen das Ausmaß der Bewegung abbilden, insbesondere im Hinblick auf das vorgenannte Erkennen einer Atemfrequenz des Objekts.

Bei einigen Ausführungsformen überlappen zumindest ein Messrahmen einer der zumindest zwei Gruppen von Messrahmen und ein Messrahmen einer anderen der zumindest zwei Gruppen von Messrahmen zeitlich. Auf diese Weise können simultan anhand eines oder mehrerer Messrahmen der einen Gruppe von Messrahmen mit kurzer zeitlicher Länge schnelle Bewegungen des Objekts erkannt werden, während anhand eines oder mehrerer Messrahmen der anderen Gruppe von Messrahmen mit großer zeitlicher Länge langsame Bewegungen des Objekts erkannt werden können. Wenn beispielsweise fünf Gruppen von Messrahmen verwendet werden, die jeweils eine zeitliche Länge von 128 ms, 256 ms, 512 ms, 1024 ms bzw. 2048 ms aufweisen, können mittels des Auswertungsmodels alle oder zumindest nahezu alle möglichen Bewegungen des Objekts erkannt werden.

Bei einigen Ausführungsformen umfasst das Auswertungsmodells ein trainiertes Machine-Learning-Modell, wobei Daten, die zumindest die zumindest zwei Gruppen von Radarpunktwolken oder Werte von einer oder mehreren dazu bestimmten Kenngrößen repräsentieren, als Eingangsdaten dem Machine-Learning-Modell zu Verfügung gestellt werden, um als dessen Ausgabe das Auswertungsergebnis zu erhalten. Dies erlaubt eine besonders flexible und anpassungsfähige Implementierung des Auswertungsmodells, wobei das Maschinenlernen dazu genutzt werden kann, das Auswertungsmodell und somit die Qualität und Zuverlässigkeit der Sitzbelegungserkennung kontinuierlich zu verbessern. Das Auswertungsergebnis kann dabei insbesondere eine Klasse einer Sitzbelegungszustandsklassifikation angeben. Das Machine-Learning-Modell kann insbesondere ein Entscheidungsbaum-basiertes Modell oder ein auf einem künstlichen neuronalen Netz beruhendes Modell sein. Hierbei kann die Kenngröße beispielsweise durch die Anzahl der Radarpunkte in den Radarpunktwolken der zumindest zwei Gruppen von Radarpunktwolken oder eine davon abhängige Größe festgelegt sein.

Bei einigen Ausführungsformen umfasst das Ausgeben der Information ein Ansteuern einer Signalquelle in Abhängigkeit von der Information, um die Signalquelle zu veranlassen, in Abhängigkeit von der Ansteuerung ein definiertes Signal auszugeben. Die Signalquelle kann insbesondere eine Audioquelle, eine optische Signalquelle, insbesondere Anzeigevorrichtung für Bild oder Text, und/oder ein Haptik-Aktuator oder eine Kombination aus zumindest zwei der vorgenannten Signalquellen sein. So kann anhand der Signalisierung der erkannte Sitzbelegungszustand einem Benutzer mitgeteilt oder zur Steuerung eines anderen technischen Systems, wie etwa eines Airbagsystems, genutzt werden.

Bei einigen Ausführungsformen wird die Signalquelle so in Abhängigkeit von der Information angesteuert, dass sie ein Signal ausgibt, wenn die Information aus einem Auswertungsergebnis resultiert, demgemäß zumindest ein Sitz der Sitzanordnung belegt ist und/oder ein ausgewählter vorbestimmter Sitzbelegungszustand vorliegt.

Bei einigen Ausführungsformen weist das Verfahren des Weiteren ein Detektieren eines Sitzgurtanlegezustands zumindest eines Sitzes der Sitzanordnung oder Empfangen einer diesen Sitzgurtanlegezustand kennzeichnenden Sitzgurtinformation auf, wobei die Signalquelle so in Abhängigkeit von der Sitzgurtinformation und der Information aus dem Auswertungsergebnis angesteuert wird, dass sie ein Gurtanlegehinweissignal ausgibt, wenn gemäß der Information zumindest ein Sitz der Sitzanordnung belegt ist und/oder ein ausgewählter vorbestimmter Sitzbelegungszustand vorliegt und die Sitzgurtinformation angibt, dass der zugehörige Sitzgurt des Sitzes nicht angelegt ist. So lässt sich ein, insbesondere im Hinblick auf die Detektion ausschließlich, radarbasiertes Sitzgurtanlegeprüf- und -warnsystem erreichen.

Bei einigen Ausführungsformen werden die einzelnen Radarpunkte jeder Radarpunktwolke jeweils ferner durch einen Signal-zu-Rausch-Abstands-Wert des Radarsignals zum jeweiligen Radarpunkt repräsentiert. Hierbei können der Doppler-Verschiebungswert und/oder der Signal-zu-Rausch-Abstands-Wert zur Vorfilterung der Radarpunktwolke im Rahmen einer der Merkmalsbestimmung vorangehenden Vorprozessierung genutzt werden.

Bei einigen Ausführungsformen erfolgt das Bestimmen des Sitzbelegungszustands der Sitzanordnung anhand des Auswertungsmodells ausschließlich oder zumindest zahlenmäßig überwiegend auf Basis solcher Radarpunkte, deren Doppler-Verschiebungswert bei oder oberhalb einer von Null verschiedenen vorbestimmten Verschiebungsschwelle liegt. So werden nur oder zumindest überwiegend sogenannte dynamische Radarpunkte als Basis für die Auswertung genutzt, also solche Radarpunkte, die eine Bewegung des abgetasteten Objekts anzeigen, deren Doppler-Verschiebungswert bei oder oberhalb der Verschiebungsschwelle liegt. Dies kann insbesondere zur weiteren Erhöhung der Qualität, insbesondere der Zuverlässigkeit des Verfahrens genutzt werden, weil statische, d.h. im Wesentlichen unbewegte Punkte auf den Objektoberflächen, wie etwa Punkte auf einer Sitzfläche eines Sitzes, nicht oder nur in geringerer Anzahl in die Auswertung einfließen als solche Punkte, die eine Dynamik zeigen und somit mit hoher Wahrscheinlichkeit einem Lebewesen, insbesondere einer Person oder einem Tier, zuzuordnen sind. Damit kann die Verwertung der durch die Auswertung gewonnenen, ausgegebenen Information (z.B. zur Airbag-Steuerung oder einem Gurtwarnsystem) insbesondere in Abhängigkeit davon erfolgen, ob ein Lebewesen erkannt wurde oder eine statische Objektoberfläche.

Ein zweiter Aspekt der vorliegenden Lösung betrifft ein System, insbesondere eine Datenverarbeitungsvorrichtung, zum automatisierten Erkennen eines, insbesondere jeweiligen, Sitzbelegungszustands einer Sitzanordnung mit zumindest einem Sitzplatz, insbesondere mit zumindest einem Fahrzeugsitz in einem bzw. für ein Fahrzeug. Dabei weist das System eine Datenverarbeitungsvorrichtung auf, die konfiguriert ist, insbesondere mittels eines entsprechenden Computerprogramms, zum Erkennen des Sitzbelegungszustands das Verfahren nach dem ersten Aspekt auszuführen.

Ein dritter Aspekt der vorliegenden Lösung betrifft ein Computerprogramm oder Computerprogrammprodukt, aufweisend Anweisungen, die bei ihrer Ausführung auf der Datenverarbeitungsvorrichtung des Systems nach dem zweiten Aspekt, das System veranlassen, das Verfahren nach dem ersten Aspekt auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind.

Das System nach dem zweiten Aspekt kann entsprechend einen Programmspeicher aufweisen, in dem das Computerprogramm abgelegt ist. Alternativ kann das System auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Ein vierter Aspekt der vorliegenden Lösung betrifft ein Fahrzeug, das eine Sitzanordnung mit zumindest einem Sitzplatz, einen Radarsensor zur zumindest abschnittsweisen Radarabtastung der Sitzanordnung, und ein System nach dem zweiten Aspekt zum automatisierten Erkennen eines, insbesondere jeweiligen, Sitzbelegungszustands der Sitzanordnung in Abhängigkeit von einer durch den Radarsensor ausgeführten, zumindest abschnittsweisen Radarabtastung der Sitzanordnung.

Die in Bezug auf den ersten Aspekt der vorliegenden Lösung erläuterten Merkmale und Vorteile gelten entsprechend auch für die weiteren Aspekte der Lösung.

Weitere Vorteile, Merkmale und Anwendungsmöglichkeiten der vorliegenden Lösung ergeben sich aus der nachfolgenden detaillierten Beschreibung im Zusammenhang mit den Figuren.

Dabei zeigt:
**Fig. 1** schematisch eine beispielhafte Ausführungsform eines Fahrzeugs, das mit einem System zum automatisierten Erkennen eines Sitzbelegungszustands einer Sitzanordnung im Fahrzeug ausgerüstet ist;
**Fig. 2** eine beispielhafte zweidimensionale Darstellung einer zu einem einzelnen durch einen Radarsensor des Fahrzeugs aus Fig. 1 aufgenommenen Messrahmen korrespondierenden (einzelnen) Radarpunktwolke;
**Fig. 3A** einen Teil einer entsprechend der in Fig. 2 gezeigten Radarpunktwolke erfassten Radarpunktwolke, welcher durch eine Radarabtastung der in der Fig. 1 gezeigten vorderen Sitze erhalten wird, wenn sich auf den Sitzen jeweils eine Person befindet, die sich nicht schnell bzw. nur geringfügig bewegt;
**Fig. 3B** einen Teil einer entsprechend der in Fig. 2 gezeigten Radarpunktwolke erfassten Radarpunktwolke, welcher durch eine Radarabtastung der in der Fig. 1 gezeigten vorderen Sitze erhalten wird, wenn sich auf beiden Sitzen jeweils eine Person befindet, und die Person auf dem linken Sitz sich schnell bewegt, während die Person auf dem rechten Sitz im Wesentlichen stillsitzt;
**Fig. 4** eine Tabelle, in der für unterschiedliche Sitzbelegungszustände von drei Sitzen die Anzahl der in dem dem jeweiligen Sitz zugeordneten Cluster enthaltenen Radarpunkte für den Messrahmen mit der kleinsten zeitlichen Länge und der Doppler-Verschiebungswert von in dem dem jeweiligen Sitz zugeordneten Cluster enthaltenen Radarpunkten für die Sitze angegeben sind; und
**Fig. 5** ein Flussdiagramm zur Veranschaulichung einer beispielhaften Ausführungsform eines Verfahrens zum automatisierten Erkennen eines Sitzbelegungszustands einer Sitzanordnung;

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Funktionale Einheiten können insbesondere als Hardware, Software oder eine Kombination aus Hardware und Software implementiert werden.

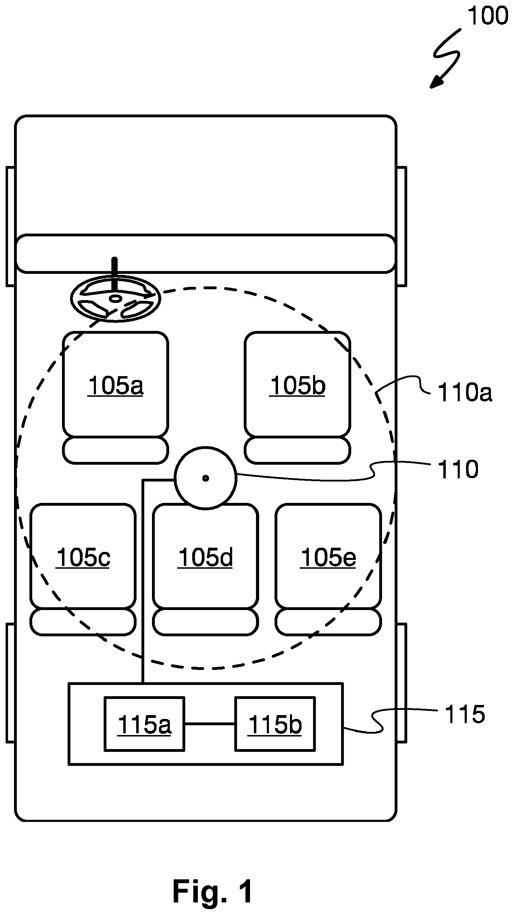

Die in **Fig. 1** schematisch dargestellte beispielhafte Ausführungsform eines Fahrzeugs 100 weist eine Sitzanordnung 105 mit fünf einzelnen Sitzen bzw. Sitzplätzen 105a bis 105e auf. Jeder der Sitzplätze 105a bis 105e ist geeignet, eine Person als Passagier des Fahrzeugs 100 aufzunehmen. Das Fahrzeug 100 weist des Weiteren einen Radarsensor 110 auf, der innerhalb der Fahrzeugkabine an deren Decke montiert und so konfiguriert ist, dass er die Sitzanordnung 105, zumindest im Wesentlichen, mithilfe von Radarstrahlen abtasten kann. Dementsprechend liegen die Sitzplätze 105a bis 105e, insbesondere deren Sitzflächen, zumindest jeweils überwiegend, innerhalb eines durch den Radarsensor 110 abtastbaren Beobachtungsfelds 11 0a. Darüber hinaus weist das Fahrzeug 100 ein System 115 zum automatisierten Erkennen eines Sitzbelegungszustands der Sitzanordnung 105 in Abhängigkeit von einer durch den Radarsensor 110 ausgeführten, zumindest abschnittsweise bezüglich des Beobachtungsfelds 110a ausgeführten Radarabtastung der Sitzanordnung 105 auf.

Das System 115 weist insbesondere eine Datenverarbeitungseinheit 115a mit zumindest einen Mikroprozessor sowie einen damit signalverbundenen Speicher 115b auf, in dem ein zur Durchführung des im Weiteren unter Bezugnahme auf Fig. 6 beschriebenen Verfahrens zum automatisierten Erkennen eines Sitzbelegungszustands der Sitzanordnung 105 konfiguriertes Computerprogramm gespeichert ist. Des Weiteren können in dem Speicher 115b die vom Radarsensor 110 bei der Radarabtastung erzeugten Sensordaten oder daraus bereits durch Weiterverarbeitung gewonnene Informationen abgelegt sein oder werden.

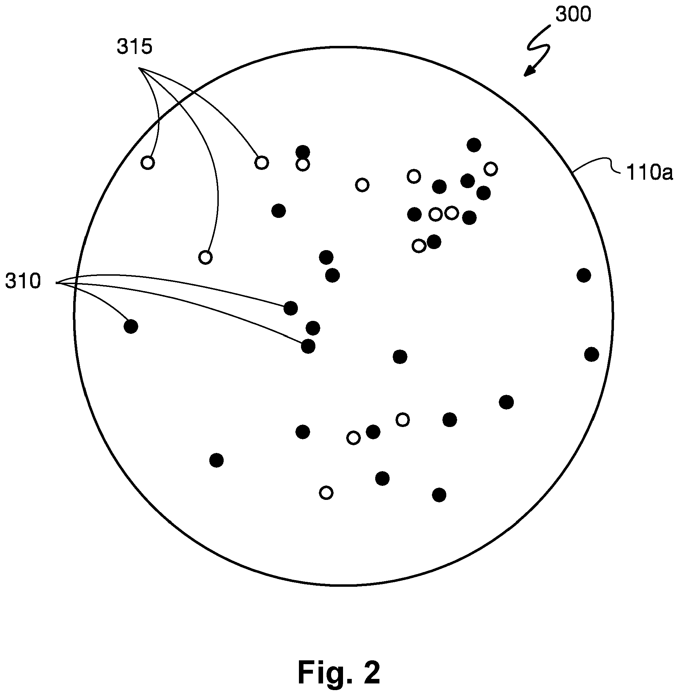

Nachfolgend wird nun auf die **Fig. 2** Bezug genommen, die eine Radarpunktwolke darstellt, wobei zum Zwecke der Darstellbarkeit die an sich dreidimensionale Radarpunktwolke durch Projektion der Positionen der Radarpunkte der Radarpunktwolke auf eine durch zwei ihrer Dimensionen aufgespannte Ebene auf zwei Dimensionen reduziert wurde.

In **Fig. 2** ist eine beispielhafte einzelne Radarpunktwolke 300 illustriert, wie sie innerhalb eines einzelnen Messrahmens, d. h. als Ergebnis einer Radarabtastung der Sitzanordnung 105 durch den Radarsensor 110 während eines festgelegten Zeitintervalls (Messzeitraum) erfasst wurde. Die Lage der einzelnen Radarpunkte innerhalb der Radarpunktwolke 300 kann durch Raumkoordinaten dargestellt werden, beispielsweise kann man der Zeichenebene und entsprechend jedem einzelnen Punkte kartesische Koordinaten X und Y zuordnen. Tatsächlich kommt in Wirklichkeit, wenn die Dimensionsreduzierung aufgrund der Zeichnung außer Acht gelassen wird, noch eine dritte Koordinate Z für die dritte Raumdimension zu.

Wenn bei der Radarabtastung nicht nur die räumlichen Positionen der Stellen, an denen der Radarstrahl von den abgetasteten Objekten reflektiert wird, als Koordinaten erfasst werden, sondern auch eine jeweilige Dopplerverschiebung gemessen wird, dann können die einzelnen Radarpunkte in Abhängigkeit vom Betrag dieser Dopplerverschiebung klassifiziert, insbesondere in zwei verschiedene Klassen eingeteilt werden. Letzteres kann etwa dadurch erfolgen, dass die Dopplerverschiebung mit einer vordefinierten Verschiebungsschwelle, die zu einer bestimmten Verschiebungsgeschwindigkeit korrespondiert, verglichen werden. In Abhängigkeit vom Ergebnis des Vergleichs können diejenigen Radarpunkte 310, die gemäß dem Wert ihrer zugeordneten Dopplerverschiebung keine Geschwindigkeit oder eine Geschwindigkeit der Objektoberfläche am Reflexionspunkt aufweisen, die unterhalb der Verschiebungswelle liegt, als "statische" Radarpunkte klassifiziert werden (in Figur 2 jeweils mit einem gefüllten schwarzen Kreis dargestellt). Umgekehrt können diejenigen Radarpunkte 315, die eine Dopplerverschiebung oberhalb der Verschiebungsschwelle aufweisen, als "dynamische" Radarpunkte 315 klassifiziert werden (in Figur 2 jeweils mit einem schwarzen Ring dargestellt).

Die Klassifizierung der Radarpunkte 310 und 315 entsprechend ihrer Dopplerverschiebung ist nicht zwingend erforderlich, sie kann jedoch genutzt werden, um die Radarpunktwolke 300, insbesondere im Rahmen einer vor ihrer Auswertung erfolgenden Vorprozessierung zu verarbeiten, insbesondere in Abhängigkeit von der Klassifizierung zu filtern. Beispielsweise könnte eine solche Filterung derart erfolgen, dass nur dynamische Radarpunkte 315 für die Auswertung berücksichtigt werden, um etwa nur bewegte Objekte zu erkennen.

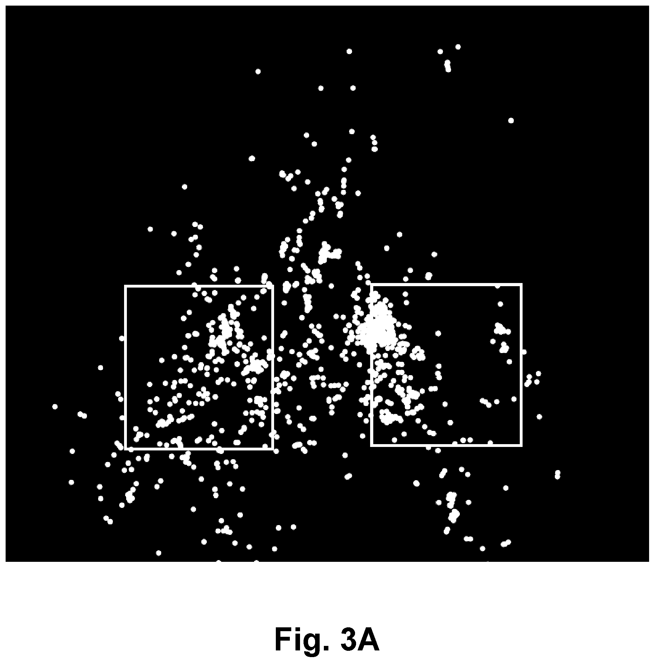

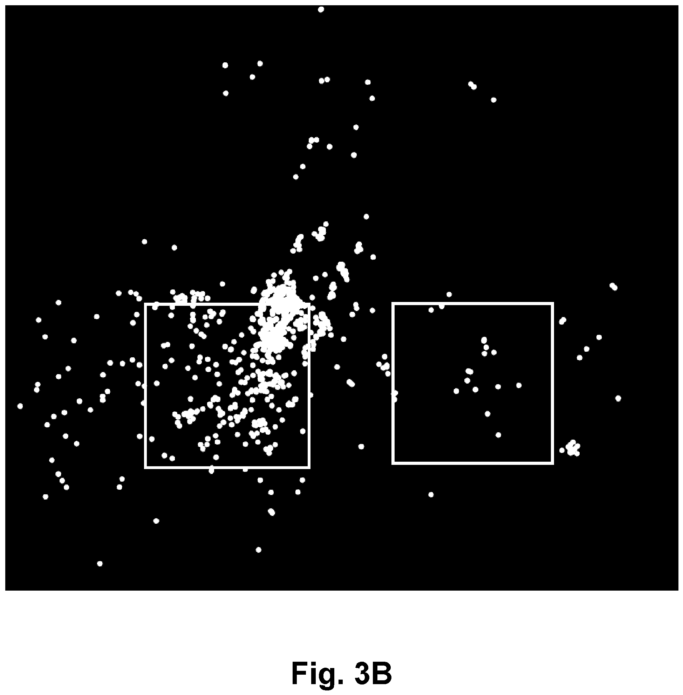

In **Fig. 3A** ist ein Teil einer entsprechend der in Fig. 2 dargestellten Radarpunktwolke 300 erfassten Radarpunktwolke dargestellt, welcher durch eine Radarabtastung der in der Figur 1 gezeigten Sitze 105a, 105b erhalten wird, wenn sich auf beiden Sitzen 105a, 105b jeweils eine Person befindet, die sich nicht schnell bzw. nur geringfügig bewegt, und in **Fig. 3B** ist ein Teil einer entsprechend der in Fig. 2 dargestellten Radarpunktwolke 305 erfassten Radarpunktwolke dargestellt, welcher durch eine Radarabtastung der in der Figur 1 gezeigten Sitze 105a, 105b erhalten wird, wenn sich auf beiden Sitzen 105a, 105b jeweils eine Person befindet, und die Person auf dem linken Sitz 105a sich schnell bewegt, während die Person auf dem rechten Sitz 105b im Wesentlichen stillsitzt.

Zusätzlich sind in den Figuren 3A und 3B quaderförmige (3D-Fall) bzw. in der vorliegenden 2D-Darstellung rechteckige, ausgewählte Raumbereiche (die durch jeweils zwei weiße Rechtecke in den Figuren 3A und 3B repräsentiert werden) eingezeichnet, die räumlich der jeweiligen Lage der einzelnen Sitzplätze 105a, 105b zugeordnet sind. Die Definition dieser Raumbereiche kann nun herangezogen werden, um die Radarpunktwolke 300 zu clustern, wobei jeder Radarpunkt (die weißen Punkte in den Figuren 3A und 3B), soweit möglich, demjenigen Raumbereich zugeordnet wird, in dem er liegt. Alle nicht in einem der Raumbereiche liegenden Radarpunkte können im Weiteren unberücksichtigt bleiben.

Wie in Fig. 3A gezeigt, sind für den Fall, dass sich auf beiden Sitzen 105a, 105b im Wesentlichen stillsitzende Personen befinden, die Anzahlen der in dem in Fig. 3A links befindlichen und dem linken Sitz 105a zugeordneten Raumbereich und in dem in Fig. 3A rechts befindlichen und dem rechten Sitz 105b zugeordneten Raumbereich liegenden Radarpunkte annährend gleich und deutlich von Null verschieden, sodass anhand des nachfolgend beschriebenen Verfahrens zum automatisierten Erkennen eines Sitzbelegungszustands einer Sitzanordnung bestimmt werden kann, dass beide Sitze 105a, 105 besetzt sind.

Im Unterschied dazu ist, wie in Fig. 3B gezeigt, für den Fall, dass sich auf beiden Sitzen 105a, 105b Personen befinden, wobei sich die auf dem linken Sitz 105a befindliche Person stark bewegt, während die auf dem rechten Sitz 105b befindliche Person im Wesentlichen stillsitzt, die Anzahl der in dem in Fig. 3A links befindlichen und dem linken Sitz 105a zugeordneten Raumbereich liegenden Radarpunkte deutlich höher als die Anzahl der in dem in Fig. 3B rechts befindlichen und dem rechten Sitz 105b zugeordneten Raumbereich liegenden Radarpunkte und auch deutlich höher als in dem in Fig. 3A gezeigten Fall. Hierbei ist die Anzahl der in dem in Fig. 3B rechts befindlichen und dem rechten Sitz 105b zugeordneten Raumbereich liegenden Radarpunkte zudem sehr gering, sodass anhand des nachfolgend beschriebenen Verfahrens zum automatisierten Erkennen eines Sitzbelegungszustands einer Sitzanordnung nicht oder nicht sicher bestimmt werden kann, dass der rechte Sitz 105b besetzt ist.

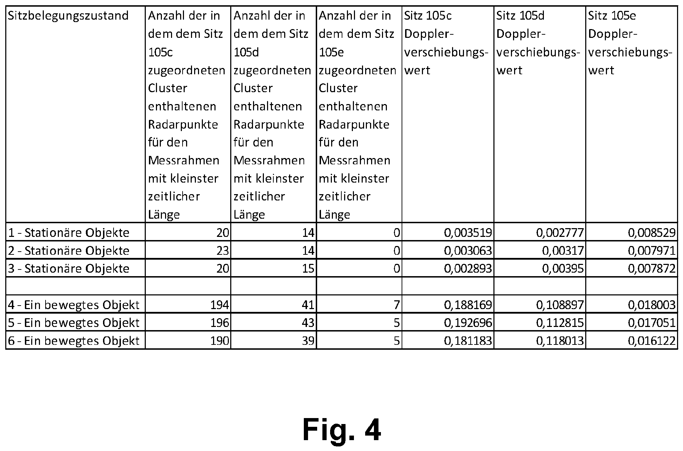

Die **Fig. 4** zeigt eine Tabelle, in der für unterschiedliche Sitzbelegungszustände von den in der Figur 1 gezeigten drei hinteren Sitzen 105c, 105d, 105e die Anzahl der in dem dem jeweiligen Sitz zugeordneten Cluster enthaltenen Radarpunkte für den Messrahmen mit der kleinsten zeitlichen Länge und der Doppler-Verschiebungswert von in dem dem jeweiligen Sitz zugeordneten Cluster enthaltenen Radarpunkten für die Sitze 105c, 105d, 105e angegeben sind.

Hierbei sitzt in den Sitzbelegungszuständen 1 bis 3 auf den Sitzen 105c und 105d jeweils eine Person, die sich nicht oder nur geringfügig bewegt, während in den Sitzbelegungszuständen 4 bis 6 eine Person auf Sitz 105c sitzt, die sich erheblich bzw. schnell bewegt, und auf Sitz 105d eine Person stillsitzt bzw. sich nicht oder nur geringfügig bewegt, wobei in allen Sitzbelegungszuständen 1 bis 6 der Sitz 105e frei bzw. unbesetzt ist.

Wie aus der Tabelle ersichtlich ist, sind für stationäre Objekte (Sitzbelegungszustände 1 bis 3) alle Werte ziemlich niedrig, wobei die Anzahl der in dem dem jeweiligen Sitz zugeordneten Cluster enthaltenen Radarpunkte für den Messrahmen mit der kleinsten zeitlichen Länge für die beiden Sitze 105c, 105d ähnlich ist und im Bereich von 10 bis 30 liegt, und die Doppler-Verschiebungswerte für die beiden Sitze 105c, 105d ebenfalls ähnlich sind und in einem Bereich unterhalb 0,01 liegen.

Wenn sich jedoch eine Person wie in den Sitzbelegungszuständen 4 bis 6 schnell und viel bewegt steigen alle diese Werte stark an. So ist die Anzahl der in dem dem Sitz 105c zugeordneten Cluster enthaltenen Radarpunkte für den Messrahmen mit der kleinsten zeitlichen Länge bis zu 10-mal höher als in den Sitzbelegungszuständen 1 bis 3 und nimmt Werte nahe 200 an. Der Doppler-Verschiebungswert ist bis zu 20-mal höher als in den Sitzbelegungszuständen 1 bis 3 und nimmt Werte von fast 0,2 an.

Des Weiteren sind erhebliche Unterschiede zwischen den Werten in Bezug auf den Sitz 105c und den Sitz 105d erkennbar, nämlich dass die Anzahl der in dem dem Sitz 105c zugeordneten Cluster enthaltenen Radarpunkte für den Messrahmen mit der kleinsten zeitlichen Länge etwa 4- bis 5-mal höher ist als die Anzahl der in dem dem Sitz 105d zugeordneten Cluster enthaltenen Radarpunkte für den Messrahmen mit der kleinsten zeitlichen Länge, und dass der Doppler-Verschiebungswert für den Sitz 105c etwa 1,5-bis 2-mal höher ist als der Doppler-Verschiebungswert für den Sitz 105d.

Diese Beobachtungen werden in dem nachfolgend beschriebenen erfindungsgemäßen Verfahren genutzt, um mittels des Auswertungsmodells bestimmte Sitzbelegungszustände auf ihre Korrektheit zu prüfen, und falls ermittelt wird, dass ein bestimmter Sitzbelegungszustand fehlerhaft ist, das entsprechende Ergebnis zu verwerfen.

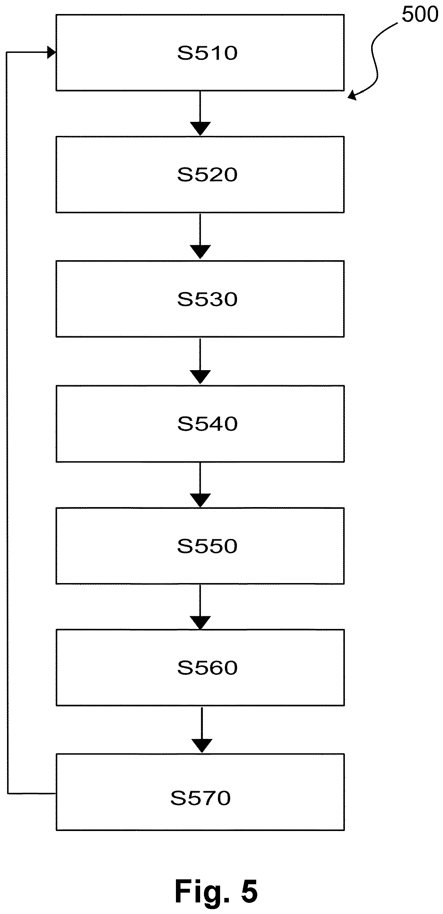

Die **Fig. 5** zeigt ein Flussdiagramm zur Veranschaulichung einer beispielhaften Ausführungsform eines Verfahrens 500 zum automatisierten Erkennen eines Sitzbelegungszustands einer Sitzanordnung. Das Verfahren kann insbesondere als computerimplementiertes Verfahren ausgebildet sein. Dazu kann es insbesondere im Speicher 115b des Systems 115 als Computerprogramm abgelegt sein und auf der Datenverarbeitungseinheit 115a ablauffähig sein.

Bei dem Verfahren 500 werden Radarmessdaten, im vorliegenden Beispiel vom Radarsensor 110 des Fahrzeugs 100, empfangen und weiterverarbeitet, um eine oder mehrere Radarpunktwolken zu bilden. Dazu werden in einem Schritt S510 zunächst die Radarmessdaten empfangen, die für jeden Messrahmen aus mehreren Messrahmen jeweils eine zugeordnete Radarpunktwolke 300 repräsentieren, so dass die Messdaten eine zu den mehreren Messrahmen korrespondierende Mehrzahl von Radarpunktwolken repräsentieren, wobei jede Radarpunktwolke 300 der Mehrzahl von Radarpunktwolken auf Basis einer zu bzw. während einem dem jeweiligen Messrahmen zugeordneten Messzeitpunkt oder Messzeitraum erfolgenden Radarabtastung eines die Sitzanordnung 105 zumindest abschnittsweise umgebenden Raumbereichs gewonnen wurde bzw. wird und Radarpunkte 310, 315 enthält.

Hierbei weisen die mehreren Messrahmen mehrere Gruppen von Messrahmen auf, welche jeweils einen oder bevorzugt mehrere Messrahmen gleicher zeitlicher Länge aufweisen, wobei die zeitliche Länge von Messrahmen unterschiedlicher Gruppen von Messrahmen unterschiedlich ist, und den mehreren Gruppen von Messrahmen jeweils eine entsprechende Gruppe von Radarpunktwolken zugeordnet ist. Des Weiteren überlappen bevorzugt zumindest ein Messrahmen einer der zumindest zwei Gruppen von Messrahmen und ein Messrahmen einer anderen der zumindest zwei Gruppen von Messrahmen zeitlich.

Dann wird in einem Schritt S520 anhand eines Auswertungsmodells, das in Abhängigkeit von zumindest zwei Gruppen von Radarpunktwolken, welche jeweils bevorzugt mehrere zeitlich aufeinanderfolgende Messrahmen aufweisen, einen von mehreren vordefinierten möglichen Sitzbelegungszuständen der Sitzanordnung 105 als Auswertungsergebnis liefert, ein Sitzbelegungszustand der Sitzanordnung 105 bestimmt, wobei die einzelnen Radarpunkte 310, 315 jeder Radarpunktwolke 300 jeweils zumindest durch eine Position des jeweiligen Radarpunkts im dreidimensionalen Raum repräsentiert werden.

Hierzu wird für jede Radarpunktwolke 300 die Menge ihrer Radarpunkte 310, 315 mittels Cluster-Bildung in Abhängigkeit von der jeweiligen räumlichen Lage der Radarpunkte 310, 315 in Bezug auf die Sitzplätze 105a bis 105e in mehrere jeweils eine Untermenge der Radarpunkte 310, 315 enthaltende Cluster unterteilt, um jedem der Sitzplätze 105a bis 105e einen ihm räumlich nächstliegenden der Cluster individuell zuzuordnen. Optional kann dabei eine Filterung dahingehend erfolgen, dass statische Radarpunkte, d. h. Radarpunkte deren Dopplerverschiebungswert geringer als eine vordefinierte Dopplerverschiebungsschwelle ist, ausgefiltert werden.

Bei der Cluster-Bildung der Radarpunktwolke 300 kann insbesondere für jeden ihrer Radarpunkte geprüft werden, ob er innerhalb von einem der definierten Raumbereiche liegt und gegebenenfalls in welchem. Somit kann jeder der Radarpunkte entweder einem der Raumbereiche oder dem sonstigen Beobachtungsfeld zugeordnet werden. Alle Radarpunkte, die innerhalb desselben Raumbereichs liegen, werden zu einem jeweiligen Cluster zusammengefasst. Im Ergebnis ist somit jedem der Sitzplätze 105a bis 105e ein entsprechendes Cluster der Radarpunktwolke 300 zugeordnet. Dies bildet die Basis dafür, dass im Weiteren je Sitzplatz 105a bis 105e individuell eine Auswertung dahingehend erfolgen kann, ob der jeweilige Sitzplatz 105a bis 105e belegt ist bzw. war oder nicht.

Um die nachfolgende Auswertung der geclusterten Radarpunktwolken 300 zu erleichtern, kann für jede der jeweiligen Radarpunktwolken der zumindest zwei Gruppen von Radarpunktwolken, die im Rahmen des Bestimmens des Sitzbelegungszustands berücksichtigt werden, ein jeweiliger Wert zumindest einer definierten Kenngröße zur Charakterisierung von Radarpunktwolken bestimmt werden, wobei insbesondere für jeden der Cluster eine entsprechende Kenngröße K(i) bestimmt werden kann, und diese Kenngröße K(i) insbesondere als die Anzahl der Radarpunkte in dem Cluster definiert sein kann. Soweit keine Filterung gemäß Doppler-Verschiebungswert stattgefunden hat, kann es sich dabei um eine gemeinsame Zählung sowohl der statischen als auch der dynamischen Radarpunkte 310 bzw. 315 handeln. Falls jedoch die statischen Radarpunkte 310 zuvor, beispielsweise, wie erwähnt, ausgefiltert wurden, handelt es sich nur noch um eine Zählung der dynamischen Radarpunkte 315.

In diesem Fall ist oder wird das Auswertungsmodell so festgelegt, dass bei dem Bestimmen des Sitzbelegungszustands der Sitzanordnung 105 das Auswertungsergebnis in Abhängigkeit von den jeweiligen Werten der zumindest einen Kenngröße für die Radarpunktwolken der zumindest zwei Gruppen von Radarpunktwolken, die im Rahmen des Bestimmens des Sitzbelegungszustands berücksichtigt werden, bestimmt wird.

Hierbei werden für zumindest eine der Kenngrößen von mehreren Radarpunktwolken einer jeweiligen der zumindest zwei Gruppen von Radarpunktwolken die jeweiligen Werte der Kenngröße bevorzugt dahingehend analysiert, ob darin ein periodischer Verlauf der Kenngröße detektiert wird, und das Auswertungsergebnis in Abhängigkeit vom Ergebnis der Analyse bestimmt.

Das Auswertungsmodells umfasst bevorzugt ein trainiertes Machine-Learning-Modell wie etwa ein künstliches neuronales Netz oder ein Entscheidungsbaum-basiertes Modell (engl. "Decision tree(s)"), wobei Daten, die zumindest die zumindest zwei Gruppen von Radarpunktwolken oder Werte von einer oder mehreren dazu bestimmten Kenngrößen repräsentieren, als Eingangsdaten dem Machine-Learning-Modell zu Verfügung gestellt werden, um als dessen Ausgabe das Auswertungsergebnis zu erhalten.

Das Bestimmen des Sitzbelegungszustands der Sitzanordnung 105 umfasst ein individuelles Bestimmen eines jeweiligen individuellen Sitzbelegungszustands für jeden der Sitzplätze 105a bis 105e in Abhängigkeit von den jeweils zugehörigen Clustern der zumindest zwei Gruppen von Radarpunktwolken, um ein einen Sitzbelegungszustand des jeweiligen Sitzplatzes 105a bis 105e kennzeichnendes Auswertungsergebnis zu erhalten.

In einem Schritt S530 wird für jeden Cluster zumindest einer Radarpunktwolke derjenigen der zumindest zwei Gruppen von Radarpunktwolken, die dem Messrahmen mit der kleinsten zeitlichen Länge zugeordnet ist, eine Anzahl der in dem jeweiligen Cluster enthaltenen Radarpunkte oder eine davon abhängige Größe bestimmt, und sodann bestimmt, ob die Anzahl der in dem jeweiligen Cluster einer einzelnen Radarpunktwolke derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe, oder ein Mittelwert der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe kleiner als ein erster vorgegebener Schwellenwert ist oder nicht.

In einem Schritt S540 wird ein in dem Speicher 105b gespeicherter und basierend auf einer früheren Radarabtastung bestimmter Sitzbelegungszustand basierend auf dem Auswertungsergebnis nur dann aktualisiert, wenn für jeden Cluster der einzelnen Radarpunktwolke derjenigen der zumindest zwei Gruppen von Radarpunktwolken, die dem Messrahmen mit der kleinsten zeitlichen Länge zugeordnet ist, die Anzahl der Radarpunkte oder die davon abhängige Größe kleiner als der erste vorgegebene Schwellenwert ist oder alle Mittelwerte der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder die davon abhängige Größe kleiner als der erste vorgegebene Schwellenwert ist.

In einem Schritt S550 wird dann eine in Abhängigkeit von dem Auswertungsergebnis definierte Information ausgegeben, beispielsweise an einer Benutzerschnittstelle des Fahrzeugs oder in Form von Daten zur Weiterverarbeitung durch ein oder mehrere andere Systeme, insbesondere Systeme des Fahrzeugs, wenn der gespeicherte Sitzbelegungszustand aktualisiert wurde, wobei die ausgegebene Information der in Schritt S520 anhand des Auswertungsmodells bestimmte Sitzbelegungszustand für die Sitzanordnung 105 sein kann.

Im vorliegenden Beispiel soll diese Information insbesondere dazu verwendet werden, zu prüfen, ob in Abhängigkeit vom Sitzbelegungszustand eines jeweiligen Sitzes 105a bis 105e und dem Ergebnis einer Prüfung dahingehend, ob ein entsprechender Sicherheitsgurt für diesen Sitz angelegt wurde oder nicht, ein Gurtwarnsignal auszugeben oder nicht.

Dazu kann in einem Schritt S560 geprüft werden, ob der Sicherheitsgurt zum betreffenden Sitz (beispielsweise zum Sitz 105b) angelegt ist und in einem Schritt S570 eine Funktionalität des Fahrzeugs 100 in Abhängigkeit vom der im Schritt S550 ausgegebenen Information zum Sitzbelegungszustand und dem im Schritt S560 bestimmten Status des Sicherheitsgurts gesteuert werden. Insbesondere kann dies so erfolgen, dass in dem Schritt S570 eine Signalquelle zur Ausgabe eines insbesondere optischen und/oder akustischen Gurtstatussignals angesteuert wird, um einem oder mehreren anderen Insassen des Fahrzeugs gegebenenfalls zu signalisieren, dass ein Sitz zwar belegt aber dort der Sicherheitsgurt nicht angelegt ist. Danach verzweigt das Verfahren zurück zum Schritt 510, um einen weiteren Schleifendurchlauf zu starten.

In einer Ausführungsform, in der die die einzelnen Radarpunkte 310, 315 jeder Radarpunktwolke 300 jeweils ferner durch den Doppler-Verschiebungswert des Radarsignals zum jeweiligen Radarpunkt repräsentiert werden, werden bevorzugt in Schritt 530 für jeden Cluster zumindest einer Radarpunktwolke der zumindest zwei Gruppen von Radarpunktwolken bestimmt, ob der Doppler-Verschiebungswert jedes Radarpunkts des jeweiligen Clusters oder ein Mittelwert der Doppler-Verschiebungswerte aller Radarpunkte des jeweiligen Clusters kleiner als ein zweiter vorgegebener Schwellenwert ist oder nicht, und in Schritt 540 der gespeicherte Sitzbelegungszustand basierend auf dem Auswertungsergebnis nur dann aktualisiert wird, wenn für jeden Cluster einer einzelnen Radarpunktwolke der zumindest zwei Gruppen von Radarpunktwolken der Doppler-Verschiebungswert jedes Radarpunkts des jeweiligen Clusters oder ein Mittelwert der Doppler-Verschiebungswerte aller Radarpunkte des jeweiligen Clusters kleiner als der zweite vorgegebene Schwellenwert ist oder ein Mittelwert der jeweiligen Mittelwerte der Doppler-Verschiebungswerte aller in jeweiligen, einander räumlich entsprechenden Clustern mehrerer Radarpunktwolken der zumindest zwei Gruppen von Radarpunktwolken enthaltenen Radarpunkte kleiner als der vorgegebene zweite Schwellenwert ist.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, sofern diese unter dem Schutzbereich der Ansprüche liegen.

### BEZUGSZEICHENLISTE

- 100: Fahrzeug
- 105: Sitzanordnung
- 105a-e: Sitze bzw. Sitzplätze
- 110: Radarsensor
- 110a: Beobachtungsfeld des Radarsensors 110
- 115: System zum automatisierten Erkennen eine Sitzbelegungszustands
- 115a: Datenverarbeitungseinheit
- 115b: Speicher
- 300: (einzelne) Radarpunktwolke
- 310: statische Radarpunkte
- 315: dynamische Radarpunkte
- 500: Verfahren zum automatisierten Erkennen eines Sitzbelegungszustands
- S510-S570: einzelne Prozesse oder Verfahrensschritte im Rahmen des Verfahrens 500

## Patentansprüche

1. Verfahren zum automatisierten Erkennen eines Sitzbelegungszustands einer Sitzanordnung (105) mit einer Mehrzahl von Sitzplätzen (105a-e), für die individuell oder kumulativ ein Sitzbelegungszustand im Rahmen des Verfahrens zu bestimmen ist, wobei das Verfahren aufweist:
Empfangen oder Erzeugen von Messdaten, die für jeden Messrahmen aus mehreren Messrahmen jeweils eine zugeordnete Radarpunktwolke (300) repräsentieren, so dass die Messdaten eine zu den mehreren Messrahmen korrespondierende Mehrzahl von Radarpunktwolken repräsentieren, wobei jede Radarpunktwolke (300) der Mehrzahl von Radarpunktwolken auf Basis einer zu bzw. während einem dem jeweiligen Messrahmen zugeordneten Messzeitpunkt oder Messzeitraum erfolgenden Radarabtastung eines die Sitzanordnung (105) zumindest abschnittsweise umgebenden Raumbereichs gewonnen wurde bzw. wird und Radarpunkte (310, 315) enthält, die mehreren Messrahmen mehrere Gruppen von Messrahmen aufweisen, welche jeweils einen oder mehrere Messrahmen gleicher zeitlicher Länge aufweisen, die zeitliche Länge von Messrahmen unterschiedlicher Gruppen von Messrahmen unterschiedlich ist, und den mehreren Gruppen von Messrahmen jeweils eine entsprechende Gruppe von Radarpunktwolken zugeordnet ist; und
Bestimmen eines Sitzbelegungszustands der Sitzanordnung (105) anhand eines Auswertungsmodells, das in Abhängigkeit von zumindest zwei Gruppen von Radarpunktwolken einen von mehreren vordefinierten möglichen Sitzbelegungszuständen der Sitzanordnung (105) als Auswertungsergebnis liefert; wobei
die einzelnen Radarpunkte (310, 315) jeder Radarpunktwolke (300) jeweils zumindest durch eine Position des jeweiligen Radarpunkts im dreidimensionalen Raum repräsentiert werden;
für jede Radarpunktwolke (300) die Menge ihrer Radarpunkte (310, 315) mittels Cluster-Bildung in Abhängigkeit von der jeweiligen räumlichen Lage der Radarpunkte (310, 315) in Bezug auf die Sitzplätze (105a-e) in mehrere jeweils eine Untermenge der Radarpunkte (310, 315) enthaltende Cluster unterteilt wird, um jedem der Sitzplätze (105a-e) einen ihm räumlich nächstliegenden der Cluster individuell zuzuordnen;
das Bestimmen des Sitzbelegungszustands der Sitzanordnung (105) ein individuelles Bestimmen eines jeweiligen individuellen Sitzbelegungszustands für jeden der Sitzplätze (105a-e) in Abhängigkeit von den jeweils zugehörigen Clustern der zumindest zwei Gruppen von Radarpunktwolken umfasst, um ein einen Sitzbelegungszustand des jeweiligen Sitzplatzes (105a-e) kennzeichnendes Auswertungsergebnis zu erhalten;
für jeden Cluster zumindest einer Radarpunktwolke derjenigen der zumindest zwei Gruppen von Radarpunktwolken, die dem Messrahmen mit der kleinsten zeitlichen Länge zugeordnet ist, eine Anzahl der in dem jeweiligen Cluster enthaltenen Radarpunkte oder eine davon abhängige Größe bestimmt wird,
bestimmt wird, ob die Anzahl der in dem jeweiligen Cluster einer einzelnen Radarpunktwolke derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe, oder ein Mittelwert der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder eine davon abhängige Größe kleiner als ein erster vorgegebener Schwellenwert ist oder nicht, und
ein gespeicherter Sitzbelegungszustand basierend auf dem Auswertungsergebnis nur dann aktualisiert wird, wenn für jeden Cluster der einzelnen Radarpunktwolke derjenigen der zumindest zwei Gruppen von Radarpunktwolken, die dem Messrahmen mit der kleinsten zeitlichen Länge zugeordnet ist, die Anzahl der Radarpunkte oder die davon abhängige Größe kleiner als der erste vorgegebene Schwellenwert ist oder alle Mittelwerte der jeweiligen Anzahlen der in jeweiligen, einander räumlich entsprechenden Clustern mehrerer Radarpunktwolken derjenigen der zumindest zwei Gruppen von Radarpunktwolken, die dem Messrahmen mit der kleinsten zeitlichen Länge zugeordnet ist, enthaltenen Radarpunkte oder die davon abhängige Größe kleiner als der erste vorgegebene Schwellenwert ist, und
Ausgeben einer in Abhängigkeit von dem Auswertungsergebnis definierten Information, wenn der gespeicherte Sitzbelegungszustand aktualisiert wurde.

2. Verfahren nach Anspruch 1, wobei die einzelnen Radarpunkte (310, 315) jeder Radarpunktwolke (300) jeweils ferner durch einen Doppler-Verschiebungswert des Radarsignals zum jeweiligen Radarpunkt repräsentiert werden, und für jeden Cluster zumindest einer Radarpunktwolke der zumindest zwei Gruppen von Radarpunktwolken bestimmt wird, ob der Doppler-Verschiebungswert jedes Radarpunkts des jeweiligen Clusters oder ein Mittelwert der Doppler-Verschiebungswerte aller Radarpunkte des jeweiligen Clusters kleiner als ein zweiter vorgegebener Schwellenwert ist oder nicht, und
der gespeicherte Sitzbelegungszustand basierend auf dem Auswertungsergebnis nur dann aktualisiert wird, wenn für jeden Cluster einer einzelnen Radarpunktwolke der zumindest zwei Gruppen von Radarpunktwolken der Doppler-Verschiebungswert jedes Radarpunkts des jeweiligen Clusters oder ein Mittelwert der Doppler-Verschiebungswerte aller Radarpunkte des jeweiligen Clusters kleiner als der zweite vorgegebene Schwellenwert ist oder ein Mittelwert der jeweiligen Mittelwerte der Doppler-Verschiebungswerte aller in jeweiligen, einander räumlich entsprechenden Clustern mehrerer Radarpunktwolken der zumindest zwei Gruppen von Radarpunktwolken enthaltenen Radarpunkte kleiner als der vorgegebene zweite Schwellenwert ist.

3. Verfahren nach einem der vorausgehenden Ansprüche, wobei die zumindest zwei Gruppen von Messrahmen mehrere zeitlich aufeinanderfolgende Messrahmen aufweisen.

4. Verfahren nach einem der vorausgehenden Ansprüche, des Weiteren aufweisend:
für jede der jeweiligen Radarpunktwolken der zumindest zwei Gruppen von Radarpunktwolken, die im Rahmen des Bestimmens des Sitzbelegungszustands berücksichtigt werden, Bestimmen des jeweiligen Werts zumindest einer definierten Kenngröße zur Charakterisierung von Radarpunktwolken;
wobei das Auswertungsmodell so festgelegt ist oder wird, dass bei dem Bestimmen des Sitzbelegungszustands der Sitzanordnung (105) das Auswertungsergebnis in Abhängigkeit von den jeweiligen Werten der zumindest einen Kenngröße für die Radarpunktwolken der zumindest zwei Gruppen von Radarpunktwolken, die im Rahmen des Bestimmens des Sitzbelegungszustands berücksichtigt werden, bestimmt wird.

5. Verfahren nach Anspruch 4, wobei für zumindest eine der Kenngrößen von mehreren Radarpunktwolken einer jeweiligen der zumindest zwei Gruppen von Radarpunktwolken die jeweiligen Werte der Kenngröße dahingehend analysiert werden, ob darin ein periodischer Verlauf der Kenngröße detektiert wird; und das Auswertungsergebnis in Abhängigkeit vom Ergebnis der Analyse bestimmt wird.

6. Verfahren nach Anspruch 4 oder 5, wobei die bzw. eine der Kenngrößen durch die Anzahl der Radarpunkte (310, 315) in der jeweiligen Radarpunktpunktwolke oder eine davon abhängige Größe festgelegt ist oder wird.

7. Verfahren nach einem der vorausgehenden Ansprüche, wobei zumindest ein Messrahmen einer der zumindest zwei Gruppen von Messrahmen und ein Messrahmen einer anderen der zumindest zwei Gruppen von Messrahmen zeitlich überlappen.

8. Verfahren nach einem der vorausgehenden Ansprüche, wobei das Auswertungsmodells ein trainiertes Machine-Learning-Modell umfasst; und Daten, die zumindest die zumindest zwei Gruppen von Radarpunktwolken oder Werte von einer oder mehreren dazu bestimmten Kenngrößen repräsentieren, als Eingangsdaten dem Machine-Learning-Modell zu Verfügung gestellt werden, um als dessen Ausgabe das Auswertungsergebnis zu erhalten.

9. Verfahren nach einem der vorausgehenden Ansprüche, wobei das Ausgeben der Information ein Ansteuern einer Signalquelle in Abhängigkeit von der Information umfasst, um die Signalquelle zu veranlassen, in Abhängigkeit von der Ansteuerung ein definiertes Signal auszugeben.

10. Verfahren nach Anspruch 9, wobei die Signalquelle so in Abhängigkeit von der Information angesteuert wird, dass sie ein Signal ausgibt, wenn die Information aus einem Auswertungsergebnis resultiert, demgemäß zumindest ein Sitz der Sitzanordnung (105) belegt ist und/oder ein ausgewählter vorbestimmter Sitzbelegungszustand vorliegt.

11. Verfahren nach Anspruch 10, des Weiteren aufweisend:
Detektieren eines Sitzgurtanlegezustands zumindest eines Sitzes der Sitzanordnung (105) oder Empfangen einer diesen Sitzgurtanlegezustand kennzeichnenden Sitzgurtinformation;
wobei die Signalquelle so in Abhängigkeit von der Sitzgurtinformation und der Information aus dem Auswertungsergebnis angesteuert wird, dass sie ein Gurtanlegehinweissignal ausgibt, wenn gemäß der Information zumindest ein Sitz der Sitzanordnung (105) belegt ist und/oder ein ausgewählter vorbestimmter Sitzbelegungszustand vorliegt und Sitzgurtinformation angibt, dass der zugehörige Sitzgurt des Sitzes nicht angelegt ist.

12. Verfahren nach einem der vorausgehenden Ansprüche, wobei die einzelnen Radarpunkte (310, 315) jeder Radarpunktwolke (300) jeweils ferner durch einen Signal-zu-Rausch-Abstands-Wert des Radarsignals zum jeweiligen Radarpunkt repräsentiert werden.

13. Verfahren nach einem der vorausgehenden Ansprüche und Anspruch 2, wobei das Bestimmen des Sitzbelegungszustands der Sitzanordnung (105) anhand des Auswertungsmodells ausschließlich oder zumindest zahlenmäßig überwiegend auf Basis solcher Radarpunkte (310, 315) erfolgt, deren Doppler-Verschiebungswert bei oder oberhalb einer von Null verschiedenen vorbestimmten Verschiebungsschwelle liegt.

14. System (115) zum automatisierten Erkennen eines Sitzbelegungszustands einer Sitzanordnung (105) mit zumindest einem Sitzplatz (105a, 105b), wobei das System (115) eine Datenverarbeitungsvorrichtung aufweist, die konfiguriert ist, zum Erkennen des Sitzbelegungszustands das Verfahren nach einem der vorausgehenden Ansprüche auszuführen.

15. Computerprogramm oder Computerprogrammprodukt, aufweisend Anweisungen, die bei ihrer Ausführung auf der Datenverarbeitungsvorrichtung des Systems (115) nach Anspruch 14, das System (115) veranlassen, das Verfahren nach einem der Ansprüche 1 bis 13 auszuführen.

16. Fahrzeug (100), aufweisend:
eine Sitzanordnung (105) mit zumindest einem Sitzplatz (105a-e);
einen Radarsensor (110) zur zumindest abschnittsweisen Radarabtastung der Sitzanordnung (105); und
ein System (115) nach Anspruch 14 zum automatisierten Erkennen eines Sitzbelegungszustands der Sitzanordnung (105) in Abhängigkeit von einer durch den Radarsensor (110) ausgeführten, zumindest abschnittsweisen Radarabtastung der Sitzanordnung (105).

## Claims

1. Method for automated detection of a seat occupancy state of a seat arrangement (105) having a plurality of seats (105a-e) for which a seat occupancy state is to be determined individually or cumulatively as part of the method, the method comprising:
receiving or generating measurement data that, for each measurement frame from multiple measurement frames, in each case represent an associated radar point cloud (300), with the result that the measurement data represent a plurality of radar point clouds that corresponds to the multiple measurement frames, wherein each radar point cloud (300) of the plurality of radar point clouds has been or is obtained on the basis of a radar scan of a spatial area surrounding at least portions of the seat arrangement (105), said radar scan taking place at or during a measurement time or measurement period associated with the respective measurement frame, and contains radar points (310, 315), the multiple measurement frames comprise multiple groups of measurement frames that each comprise one or more measurement frames of identical temporal length, the temporal length of measurement frames of different groups of measurement frames is different, and the multiple groups of measurement frames each have an associated corresponding group of radar point clouds; and
determining a seat occupancy state of the seat arrangement (105) on the basis of an evaluation model that takes at least two groups of radar point clouds as a basis for delivering one of multiple predefined possible seat occupancy states of the seat arrangement (105) as an evaluation result; wherein
the individual radar points (310, 315) of each radar point cloud (300) are each represented at least by a position of the respective radar point in three-dimensional space;
for each radar point cloud (300), the set of its radar points (310, 315) is divided, by means of cluster formation, on the basis of the respective spatial location of the radar points (310, 315) with regard to the seats (105a-e), into multiple clusters that each contain a subset of the radar points (310, 315), in order to individually assign each of the seats (105a-e) one of the clusters, which is spatially closest to it;
determining the seat occupancy state of the seat arrangement (105) includes individually determining a respective individual seat occupancy state for each of the seats (105a-e) on the basis of the respective related clusters of the at least two groups of radar point clouds, in order to obtain an evaluation result that denotes a seat occupancy state of the respective seat (105a-e);
for each cluster of at least one radar point cloud of that one of the at least two groups of radar point clouds that is associated with the measurement frame having the shortest temporal length, a number of the radar points contained in the respective cluster, or a variable dependent thereon, is determined,
it is determined whether or not the number of radar points contained in the respective cluster of an individual radar point cloud of that one of the at least two groups of radar point clouds that is associated with the measurement frame having the shortest temporal length, or a variable dependent thereon, or a mean value of the respective numbers of radar points contained in respective clusters, which spatially correspond to one another, of multiple radar point clouds of that one of the at least two groups of radar point clouds that is associated with the measurement frame having the shortest temporal length, or a variable dependent thereon, is less than a first prescribed threshold value, and
a stored seat occupancy state is updated on the basis of the evaluation result only if, for each cluster of the individual radar point cloud of that one of the at least two groups of radar point clouds that is associated with the measurement frame having the shortest temporal length, the number of radar points, or the variable dependent thereon, is less than the first prescribed threshold value or all mean values of the respective numbers of radar points contained in respective clusters, which spatially correspond to one another, of multiple radar point clouds of that one of the at least two groups of radar point clouds that is associated with the measurement frame having the shortest temporal length, or the variable dependent thereon, is less than the first prescribed threshold value, and
outputting information defined on the basis of the evaluation result if the stored seat occupancy state was updated.

2. Method according to Claim 1, wherein the individual radar points (310, 315) of each radar point cloud (300) are each also represented by a Doppler shift value of the radar signal in relation to the respective radar point, and for each cluster of at least one radar point cloud of the at least two groups of radar point clouds, it is determined whether or not the Doppler shift value of each radar point of the respective cluster or a mean value of the Doppler shift values of all radar points of the respective cluster is less than a second prescribed threshold value, and
the stored seat occupancy state is updated on the basis of the evaluation result only if, for each cluster of an individual radar point cloud of the at least two groups of radar point clouds, the Doppler shift value of each radar point of the respective cluster or a mean value of the Doppler shift values of all radar points of the respective cluster is less than the second prescribed threshold value, or a mean value of the respective mean values of the Doppler shift values of all radar points contained in respective clusters, which spatially correspond to one another, of multiple radar point clouds of the at least two groups of radar point clouds is less than the prescribed second threshold value.

3. Method according to either of the preceding claims, wherein the at least two groups of measurement frames comprise multiple temporally successive measurement frames.

4. Method according to one of the preceding claims, moreover comprising:
for each of the respective radar point clouds of the at least two groups of radar point clouds that are taken into consideration for determining the seat occupancy state, determining the respective value of at least one defined characteristic variable for characterizing radar point clouds;
wherein the evaluation model has been or is specified such that determining the seat occupancy state of the seat arrangement (105) involves determining the evaluation result on the basis of the respective values of the at least one characteristic variable for the radar point clouds of the at least two groups of radar point clouds that are taken into consideration for determining the seat occupancy state.

5. Method according to Claim 4, wherein, for at least one of the characteristic variables of multiple radar point clouds of a respective one of the at least two groups of radar point clouds, the respective values of the characteristic variable are analysed to ascertain whether a periodic response of the characteristic variable is detected therein; and the evaluation result is determined on the basis of the result of the analysis.

6. Method according to Claim 4 or 5, wherein the or one of the characteristic variables has been or is specified by the number of radar points (310, 315) in the respective radar-point point cloud or a variable dependent thereon.

7. Method according to one of the preceding claims, wherein at least one measurement frame of one of the at least two groups of measurement frames and a measurement frame of another of the at least two groups of measurement frames overlap in time.

8. Method according to one of the preceding claims, wherein the evaluation model includes a trained machine learning model; and data that represent at least the at least two groups of radar point clouds or values of one or more characteristic variables determined therefor are made available to the machine learning model as input data, in order to obtain the evaluation result as the output therefrom.

9. Method according to one of the preceding claims, wherein outputting the information includes controlling a signal source on the basis of the information in order to cause the signal source to take the control as a basis for outputting a defined signal.

10. Method according to Claim 9, wherein the signal source is controlled on the basis of the information such that it outputs a signal if the information results from an evaluation result according to which at least one seat of the seat arrangement (105) is occupied and/or a selected predetermined seat occupancy state exists.

11. Method according to Claim 10, moreover comprising:
detecting a seatbelt fastening state of at least one seat of the seat arrangement (105) or receiving seatbelt information that denotes this seatbelt fastening state;
wherein the signal source is controlled on the basis of the seatbelt information and the information from the evaluation result such that it outputs a seatbelt fastening alert signal if, according to the information, at least one seat of the seat arrangement (105) is occupied and/or a selected predetermined seat occupancy state exists and seatbelt information indicates that the related seatbelt of the seat is not fastened.

12. Method according to one of the preceding claims, wherein the individual radar points (310, 315) of each radar point cloud (300) are each also represented by a signal-to-noise ratio value of the radar signal in relation to the respective radar point.

13. Method according to one of the preceding claims and Claim 2, wherein the seat occupancy state of the seat arrangement (105) is determined on the basis of the evaluation model exclusively or at least numerically predominantly on the basis of radar points (310, 315) whose Doppler shift value is at or above a predetermined shift threshold different from zero.

14. System (115) for automated detection of a seat occupancy state of a seat arrangement (105) having at least one seat (105a, 105b), wherein the system (115) comprises a data processing device configured to detect the seat occupancy state by carrying out the method according to one of the preceding claims.

15. Computer program or computer program product, comprising instructions that, when executed on the data processing device of the system (115) according to Claim 14, cause the system (115) to carry out the method according to one of Claims 1 to 13.

16. Vehicle (100), comprising:
a seat arrangement (105) having at least one seat (105a-e) ;
a radar sensor (110) for radar scanning at least portions of the seat arrangement (105); and
a system (115) according to Claim 14 for automated detection of a seat occupancy state of the seat arrangement (105) on the basis of radar scanning of at least portions of the seat arrangement (105) that is performed by the radar sensor (110).

## Revendications

1. Procédé de reconnaissance automatisée d'un état d'occupation de siège d'un arrangement de sièges (105) comprenant une pluralité de places assises (105a-e) pour lesquelles un état d'occupation de siège doit être déterminé individuellement ou de manière cumulée dans le cadre du procédé, le procédé comprenant :
réception ou génération de données de mesure qui, pour chaque trame de mesure parmi plusieurs trames de mesure, représentent respectivement un nuage de points radar (300) associé, de sorte que les données de mesure représentent une pluralité de nuages de points radar correspondant aux plusieurs trames de mesure, chaque nuage de points radar (300) de la pluralité de nuages de points radar ayant été ou étant obtenu sur la base d'un balayage radar d'une zone spatiale qui entoure au moins par sections l'arrangement de sièges (105), effectué à un moment de mesure associé ou pendant une période de mesure associée à la trame de mesure respective, et contient des points radar (310, 315), les plusieurs trames de mesure présentant plusieurs groupes de trames de mesure qui possèdent respectivement une ou plusieurs trames de mesure de même longueur temporelle, la longueur temporelle de trames de mesure de différents groupes de trames de mesure étant différente, et un groupe correspondant de nuages de points radar étant respectivement associé aux plusieurs groupes de trames de mesure ; et
détermination d'un état d'occupation de siège de l'arrangement de sièges (105) à l'aide d'un modèle d'évaluation qui, en fonction d'au moins deux groupes de nuages de points radar, fournit comme résultat d'évaluation l'un de plusieurs états prédéfinis possibles d'occupation de siège de l'arrangement de sièges (105) ;
les points radar (310, 315) individuels de chaque nuage de points radar (300) étant respectivement représentés au moins par une position du point radar respectif dans l'espace tridimensionnel ;
pour chaque nuage de points radar (300), l'ensemble de ses points radar (310, 315) étant subdivisé, au moyen d'une formation de grappes en fonction de la position spatiale respective des points radar (310, 315) par rapport aux places assises (105a-e), en plusieurs grappes contenant chacune un sous-ensemble des points radar (310, 315), afin d'affecter individuellement à chacune des places assises (105a-e) l'une des grappes qui lui est la plus proche dans l'espace ;
la détermination de l'état d'occupation de siège de l'arrangement de sièges (105) comprenant une détermination individuelle d'un état d'occupation de siège individuel respectif pour chacune des places assises (105a-e) en fonction des grappes respectivement associées des au moins deux groupes de nuages de points radar, afin d'obtenir un résultat d'évaluation qui caractérise un état d'occupation de siège de la place assise (105a-e) respective ;
pour chaque grappe d'au moins un nuage de points radar de celui des au moins deux groupes de nuages de points radar qui est associé à la trame de mesure ayant la plus petite longueur temporelle, un nombre de points radar contenus dans la grappe respective ou une grandeur qui en dépend étant déterminé,
une détermination étant effectuée afin de déterminer si le nombre de points radar contenus dans la grappe respective d'un nuage de points radar individuel de celui des au moins deux groupes de nuages de points radar qui est associé à la trame de mesure ayant la plus petite longueur temporelle, ou une grandeur qui en dépend, ou
une valeur moyenne des nombres respectifs de points radar contenus dans les grappes respectives, correspondant spatialement les unes aux autres, de plusieurs nuages de points de celui des au moins deux groupes de nuages de points radar qui est associé à la trame de mesure ayant la plus petite longueur temporelle, ou une grandeur qui en dépend, est inférieure ou non à une première valeur de seuil prédéfinie, et
un état d'occupation de siège mémorisé n'étant actualisé sur la base du résultat de l'évaluation que si, pour chaque grappe du nuage de points radar individuel de celui des au moins deux groupes de nuages de points radar qui est associé à la trame de mesure ayant la plus petite longueur temporelle, le nombre de points radar ou la grandeur qui en dépend est inférieur à la première valeur de seuil prédéfinie ou toutes les valeurs moyennes des nombres respectifs des points radar contenus dans les grappes respectives, correspondant spatialement les unes aux autres, de plusieurs nuages de points radar de celui des au moins deux groupes de nuages de points radar qui est associé à la trame de mesure ayant la plus petite longueur temporelle, ou la grandeur qui en dépend est inférieure à la première valeur de seuil prédéfinie, et
délivrance d'une information définie en fonction du résultat de l'évaluation lorsque l'état d'occupation de siège mémorisé a été mis à jour.

2. Procédé selon la revendication 1, les points radar (310, 315) individuels de chaque nuage de points radar (300) étant en outre respectivement représentés par une valeur de décalage Doppler du signal radar par rapport au point radar respectif, et pour chaque grappe d'au moins un nuage de points radar des au moins deux groupes de nuages de points radar, il est déterminé si la valeur de décalage Doppler de chaque point radar de la grappe respective ou une valeur moyenne des valeurs de décalage Doppler de tous les points radar de la grappe respective est inférieure ou non à une deuxième valeur de seuil prédéfinie, et
l'état d'occupation de siège mémorisé n'étant mis à jour sur la base du résultat d'évaluation que si, pour chaque grappe d'un nuage de points radar individuel des au moins deux groupes de nuages de points radar, la valeur de décalage Doppler de chaque point radar de la grappe respective ou une valeur moyenne des valeurs de décalage Doppler de tous les points radar de la grappe respective est inférieure à la deuxième valeur de seuil prédéfinie ou une valeur moyenne des valeurs moyennes respectives des valeurs de décalage Doppler de tous les points radar contenus dans les grappes respectives, correspondant spatialement les unes aux autres, de plusieurs nuages de points radar des au moins deux groupes de nuages de points radar est inférieure à la première valeur de seuil prédéfinie.

3. Procédé selon l'une des revendications précédentes, les au moins deux groupes de trames de mesure comprenant plusieurs trames de mesure successives dans le temps.

4. Procédé selon l'une des revendications précédentes, comprenant en outre :
pour chacun des nuages de points radars respectifs des au moins deux groupes de nuages de points radars qui sont pris en compte dans le cadre de la détermination de l'état d'occupation de siège, détermination de la valeur respective d'au moins une grandeur caractéristique définie pour caractériser des nuages de points radar ;
le modèle d'évaluation étant spécifié de telle sorte que, lors de la détermination de l'état d'occupation de siège de l'arrangement de sièges (105), le résultat de l'évaluation est déterminé en fonction des valeurs respectives de l'au moins une grandeur caractéristique pour les nuages de points radar des au moins deux groupes de nuages de points radar qui sont pris en compte dans le cadre de la détermination de l'état d'occupation de siège.

5. Procédé selon la revendication 4, pour au moins l'une des grandeurs caractéristiques de plusieurs nuages de points radar d'un groupe respectif des au moins deux groupes de nuages de points radar, les valeurs respectives de la grandeur caractéristique étant analysées afin de savoir si une évolution périodique de la grandeur caractéristique y est détectée ; et le résultat d'évaluation étant déterminé en fonction du résultat de l'analyse.

6. Procédé selon la revendication 4 ou 5, la ou l'une des grandeurs caractéristiques étant spécifiée par le nombre de points radar (310, 315) dans le nuage de points radar respectif ou par une grandeur qui en dépend.

7. Procédé selon l'une des revendications précédentes, au moins une trame de mesure de l'un des au moins deux groupes de trames de mesure et une trame de mesure d'un autre des au moins deux groupes de trames de mesure se chevauchant dans le temps.

8. Procédé selon l'une des revendications précédentes, le modèle d'évaluation comprenant un modèle d'apprentissage automatique entraîné ; et des données, qui représentent au moins les au moins deux groupes de nuages de points radar ou des valeurs d'une ou plusieurs grandeurs caractéristiques déterminées à cet effet, étant mises à disposition en tant que données d'entrée du modèle d'apprentissage automatique afin d'obtenir le résultat d'évaluation en tant que sortie de celui-ci.

9. Procédé selon l'une des revendications précédentes, la délivrance de l'information comprenant une commande d'une source de signaux en fonction de l'information afin d'amener la source de signaux à délivrer un signal défini en fonction de la commande.

10. Procédé selon la revendication 9, la source de signaux étant commandée en fonction de l'information de telle sorte qu'elle délivre un signal lorsque l'information résulte d'un résultat d'évaluation, selon lequel au moins un siège de l'arrangement de sièges (105) est occupé et/ou une condition d'occupation de siège prédéterminée sélectionnée est présente.

11. Procédé selon la revendication 10, comprenant en outre :
détection d'un état de port de ceinture de sécurité d'au moins un siège de l'arrangement de sièges (105) ou réception d'une information de ceinture de sécurité qui caractérise cet état de port de ceinture de sécurité ;
la source de signaux étant commandée en fonction de l'information de ceinture de sécurité de siège et de l'information issue du résultat d'évaluation de telle sorte qu'elle délivre un signal d'indication de port de ceinture lorsque, conformément à l'information, au moins un siège de l'arrangement de sièges (105) est occupé et/ou un état d'occupation de siège prédéterminé sélectionné est présent et l'information de ceinture de sécurité indique que la ceinture de sécurité de siège associée du siège n'est pas portée.

12. Procédé selon l'une des revendications précédentes, les points radar individuels (310, 315) de chaque nuage de points radar (300) étant en outre respectivement représentés par une valeur de rapport signal/bruit du signal radar au point radar respectif.

13. Procédé selon l'une des revendications précédentes et la revendication 2, la détermination de l'état d'occupation de siège de l'arrangement de sièges (105) à l'aide du modèle d'évaluation étant effectuée exclusivement ou au moins majoritairement en nombre sur la base des points radar (310, 315) dont la valeur de décalage Doppler est égale ou supérieure à un seuil de décalage prédéterminé différent de zéro.

14. Système (115) de reconnaissance automatisée d'un état d'occupation de siège d'un arrangement de sièges (105) comprenant au moins une place assise (105a, 105b), le système (115) comprenant un dispositif de traitement de données qui est configuré pour mettre en œuvre le procédé selon l'une des revendications précédentes pour reconnaître l'état d'occupation de siège.

15. Programme informatique ou produit de programme informatique comprenant des instructions qui, lorsqu'elles sont exécutées sur le dispositif de traitement de données du système (115) selon la revendication 14, amènent le système (115) à mettre en œuvre le procédé selon l'une des revendications 1 à 13.

16. Véhicule (100), possédant :
un arrangement de sièges (105) comprenant au moins une place assise (105a-e) ;
un capteur radar (110) servant au balayage radar au moins par sections de l'arrangement de sièges (105) ; et
un système (115) selon la revendication 14 destiné à la reconnaissance automatisée d'un état d'occupation de siège de l'arrangement de sièges (105) en fonction d'un balayage radar au moins partiel de l'arrangement de sièges (105) effectué par le capteur radar (110).
